# EUROPEAN PATENT SPECIFICATION

(11) **EP 4 299 397 B1**
(45) Date of publication and mention of the grant of the patent: **03.12.2025**
(21) Application number: 23182466.5
(22) Date of filing: 29.06.2023
(51) Int. Cl.: B60W 30/14, B60K 6/387, B60K 6/48, B60K 6/547, B60W 10/06, B60W 10/08, B60W 10/11, B60W 10/26, B60W 20/11, B60W 20/12, B60W 20/13, B60W 20/16, B60W 20/30, B60W 40/076, B60W 50/00

(54) **METHOD OF CONTROLLING A HYBRID VEHICLE ON A GRADED ROUTE**
VERFAHREN ZUR STEUERUNG EINES HYBRIDFAHRZEUGS AUF EINER ABGESTUFTEN ROUTE
PROCÉDÉ DE COMMANDE D'UN VÉHICULE HYBRIDE SUR UN TRAJET À GRADIENT

(30) Priority: 29.06.2022 NL 2032324
(43) Date of publication of application: 03.01.2024
(73) Proprietor: DAF Trucks N.V., 5643 TW Eindhoven (NL)
(72) Inventor: BEENAKKERS, Menno Adrianus, 5643 TW Eindhoven (NL)
(74) Representative: V.O.

(56) References cited:
- US-A1- 2020 156 637
- US-B2- 10 336 328
- US-B2- 10 935 127
- US-B2- 11 072 329

## Description

### Field of invention

### Description of the prior art

Many vehicles employ automatic gear shift transmissions to transfer power between an internal combustion engine and the vehicle wheels. Automatic gear shift transmissions provide a discrete set of speed ratios between the engine and the wheels. A controller selects the transmission ratio in response to the vehicle speed and a driver demand, usually communicated by depressing an accelerator pedal. High speed, low demand situations call for a low speed ratio such that the engine operates most efficiently. Low speed, high demand situations call for a high speed ratio because so the engine operates at the speed at which it can generate the most power. As the conditions change, the transmission must shift between speed ratios. A challenge is to reduce the number of shifts, which is annoying, but also detrimental for fuel efficiency, since a velocity dip that occurs as a result of an interruption of the power train will introduce efficiency losses when a set velocity is restored. This is especially the case for uphill trajectories.

In a hybrid transmission architecture, the vehicle additionally has an electric traction motor connected at the input of the transmission. The traction motor is electrically connected to a battery. The motor may be used in either a motoring mode in which energy from the battery is used to supplement the engine power or in a generating mode in which the motor converts mechanical energy into electrical energy which is stored in the battery.

In addition presently, a cruise control may have an economy setting wherein target speeds setpoints can be changed by offsetting the cruise control set speed to lower the vehicle speed in certain conditions, which may an 'eco function' e.g. to drive uphill climb at a slower pace by means of engine torque/power gain scheduling or set speed adaptions.

Many vehicles are now equipped with Global Positioning System units and extensive databases describing roads and points of interest. Traditionally, GPS units have primarily been used to provide information directly to the driver. E.g. so called predictive shift can be provided as a transmission feature aimed to prevent a down shift uphill. Such information can be available from the GPS unit. For example, US2020156637 and US10935127 describe gear shift strategies in which the vehicle speed is maintained or increased to provide sufficient momentum at the beginning of an uphill section, and at the same time the gear is predictively downshifted.

However, such a predictive gear shift forces the vehicle in a less economic driving mode.

The invention aims to prevent a shift of the automatic transmission to increase user comfort, while at the same time optimizing energy consumption.

### Summary of the invention

In one aspect, it is aimed to provide a system of controlling a hybrid vehicle hybrid vehicle on a graded route, the hybrid vehicle including a combustion engine, an electric traction motor and an automatic transmission, and further comprising a controller programmed to:
receiving data indicative of a grade profile of an anticipated route;
calculating, by a reference vehicle module, a loss of average speed of a reference vehicle caused by a gear shift while the vehicle travels over the anticipated route; and
reducing, by a comparator module, a cruise control set speed of the hybrid vehicle calculated by the reference vehicle module, thereby reducing an average vehicle speed of the vehicle by an offset due to the loss of average speed of a reference vehicle caused by a gear shift while the vehicle travels over the anticipated route; and
executing by a host vehicle module, a gear strategy suitable for preventing the gear shift of the transmission while the hybrid vehicle travels over the anticipated route.

Accordingly, the system and corresponding method avoids gear shifting on the anticipated route, while an average speed can even be maintained that is comparable to a control method of a reference vehicle wherein the cruise control set speed is kept constant and wherein the vehicle necessarily performs a gear shift. This method saves fuel and improves driver comfort. Driveability may therefore be improved without compromising fuel consumption by maintaining/lowering average speed compared to a reference vehicle (average) speed.

### BRIEF DESCRIPTION OF THE DRAWINGS

The invention will be further elucidated in the figures:
Figure 1 shows a schematic diagram of a hybrid vehicle with a modular hybrid transmission;
Figure 2 shows a method of operation of the hybrid vehicle;
Figure 3 (A - D) shows methods of operation wherein a graded profile of a route is traveled

### DETAILED DESCRIPTION

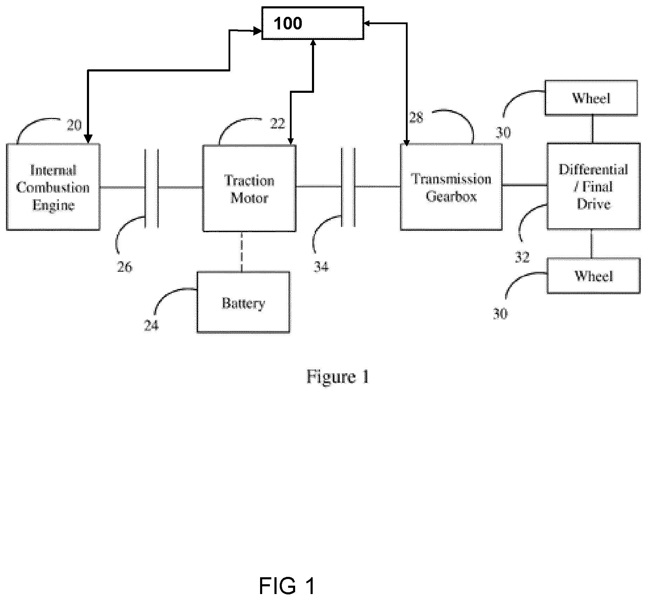

Unless otherwise defined, all terms (including technical and scientific terms) used herein have the same meaning as commonly understood by one of ordinary skill in the art to which this invention belongs as read in the context of the description and drawings. It will be further understood that terms, such as those defined in commonly used dictionaries, should be interpreted as having a meaning that is consistent with their meaning in the context of the relevant art and will not be interpreted in an idealized or overly formal sense unless expressly so defined herein. In some instances, detailed descriptions of well-known devices and methods may be omitted so as not to obscure the description of the present systems and methods. Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be further understood that the terms "comprises" and/or "comprising" specify the presence of stated features but do not preclude the presence or addition of one or more other features. Turning to Figure 1, a vehicle is illustrated with a modular hybrid transmission. Internal combustion engine 20 provides a substantial part of the tractive torque during steady state operation. Electric traction motor 22 adds supplemental torque during transient events. Traction motor 22 is electrically connected to battery 24 . Internal combustion engine 20 and traction motor 22 are mechanically connected by disconnect clutch 26 . Torque from the engine 20 and traction motor 22 are transferred by transmission gearbox 28 and differential 32 to a set of driving wheels 30 . The transmission gearbox 28 selectively engages one of a number of available transmission ratios such that the engine operates at an efficient speed over a wide range of vehicle speeds. The differential 32 permits the outside wheel to rotate slightly faster than the inside wheel as the vehicle turns a corner. A further launch clutch 34 may disconnects engine and traction motor from the wheels while the vehicle is stationary so the engine can idle. To launch the vehicle, launch clutch 34 can be gradually engaged. All controller 100 typically controls a combustion engine speed and torque, traction motor speed and torque and transmission control for execution of a gear strategy, that is, how the engine speed and torque is converted to vehicle speed. Also the controller controls a speed profile, to this end is provided with a set point control e.g..a cruise control. The controller is not limited to a particular form or implementation.

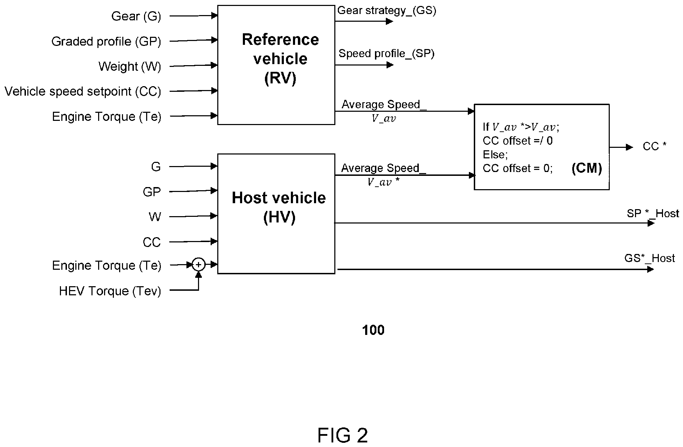

Figure 2 shows an implementation of the controller 100 that controls a gear strategy and speed profile for the host vehicle, i.e. the vehicle to be controlled. A loss of average speed of the reference vehicle is calculated due to a gear shift while the vehicle travels over the anticipated route. To this end the controller 100 is programmed to: receiving data (GP) indicative of a grade profile of an anticipated route. Such information can be provided by a GPS controller, that is programmed or receives grade parameters of an anticipated route. Furthermore, the controller 100 receives and controls gear data (G) from and to the transmission gearbox. Further parameters of importance for calculating a gear strategy for climbing the anticipated graded route are vehicle weight (W), required vehicle speed that is provided by a driver instruction, e.g..by setting a vehicle speed setpoint (VS) for a cruise controller. In addition, current and available engine torque (Te) is measured since this is necessary input for calculating an amount of extra power needed to travel over the anticipated route due to the grade profile at current set vehicle speed by the cruise controller (CC).

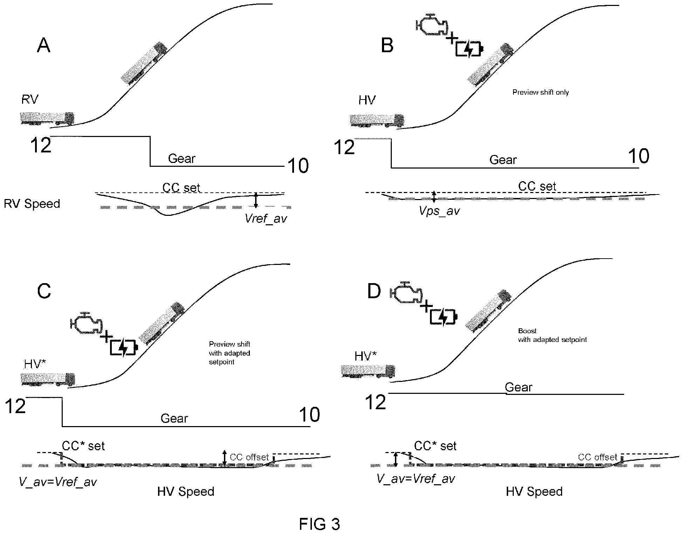

From a reference vehicle module RV, a 'classical' gear strategy is calculated. Normally when driving uphill, a downshift is performed during the ascent to gain extra power to maintain or increase speed again. Thus the engine of a reference vehicle will shift gears if an engine speed and engine torque threshold parameters are exceeded, for example, for a gear in 12^{th} speed (see also Figure 3) a shift is performed, e.g. to the 10^{th} gear when, due to the climbing of the vehicle. For a given graded profile resulting in these parameters to exceed a threshold, a classical gear strategy may not suitable for preventing the gear shift of the transmission while the hybrid vehicle travels over the anticipated route, since the engine power is incapable of providing the amount of torque needed to drive the vehicle according to the vehicle speed setpoint of the cruise controller (CC). The controller 100 comprises RV module that calculates an actual expected speed profile SP, that in practice will deviate from the vehicle speed setpoint CC. In particular, an average speed *V_av* will drop below the vehicle speed setpoint CC with a difference (CC offset) due to torque loss and shifting. The reference vehicle module RV outputs a notional average speed *V_av,* which is inputted in a comparator module CM, that provides an adapted vehicle speed setpoint CC* as will be further described below.

While the concept of lowering a vehicle setpoint speed in order to prevent a gear shift may be also applicable outside the context of an electric traction motor, a more versatile utilization of this feature can be provided when the host vehicle is equipped with a torque estimator module that includes an additional input for estimating an available amount of electric power and duration available for the traction motor of the hybrid vehicle. In such a case the powertrain has extra (boost) power available to prevent a downshift or reduce the amount of gear shifts. While the amount of boost power may be based on the current available boost power, in further variations, the amount of boost power may be made available by increasing an amount of electric power available for the hybrid vehicle in dependence of an amount of extra power needed. Additionally or alternatively, a cruise control set speed CC may be increased to a higher value prior to traveling the graded profile and prior to reducing the cruise control set speed to a lower value if a net energy efficiency is gained, e.g. when parts of a graded profiles are just short enough to maintain speed while still preventing shifting.

The Host Vehicle module (HV) will provide a modified gear shift strategy GS* and speed profile SP*, e.g. by including additional torque (boost power) available for the vehicle that may be sufficient to overcome a traveled route without shifting. The host vehicle thus provides a modified gear strategy GS* suitable for preventing the gear shift of the transmission while the hybrid vehicle travels over the anticipated route. Alternatively, or additionally, the gear shift strategy GS* may also include adjusting the transmission according to a predictive gear shift, based on the received data to a down shift prior to traveling the graded profile. Thus the HV module outputs a modified gear shift strategy GS*, with a modified speed profile SP*, and a corresponding modified average speed *V_av*.* While the HV module now provides a shift strategy that is comfortable for a driver since it will prevent large speed variations in the speed profile* due to absence of shifting on the graded route; the average speed *V_av** may typically be higher than a conventional average speed *V_av* from the conventional speed profile SP of reference vehicle module RV. With such a predictive shift strategy a transmission will be downshifted before starting the hill so that a set vehicle speed CC can be maintained.

Accordingly, comparator module CM calculates a difference between an average speed V_av of the reference vehicle and an average speed V_av* when a gear shift strategy is applied that prevents shifting uphill. Due to the additional torque applied, this modified average speed V_av* will typically be higher since a gear shift when climbing uphill is prevented. The comparator module outputs a modified vehicle speed setpoint CC* that compensates for this difference, i.e. the cruise control set speed is lowered to compensate a fraction of the amount of vehicle speed lost due to gear shifting needed to travel over the anticipated route due to the grade profile at current vehicle speed. The CC offset may be modified with additional terms without deviating from the scope of the claims, as long as the cruise control set speed is adapted to a lower value the benefits of the invention will apply with a new vehicle set speed function that lowers the set speed to have the same average speed as the 'normal driving' scenario, resulting in no or at least less shift during uphill climbing and improving driveability.

Figure 3 provides a number of gear shift strategy scenario's in combination with possible additional boost power.

Figure 3A and 3B implement conventional shift strategies, wherein Figure 3A applies a conventional shift without additional power available, and Figure 3B applies a conventional shift strategy with additional power available Figure 3A thus corresponds to a situation calculated by the reference vehicle module, wherein a loss of average speed of a reference vehicle is calculated caused by a gear shift while the vehicle travels over the anticipated route. Clearly, the RV speed profile shows a dip due to a gear shift from gear 12 to gear 10, resulting in a lower average vehicle speed Vref_av. In Figure 3B a situation is depicted corresponding to the calculation of the host vehicle module, that includes extra power available, due to additional boost power and/or a preventive shift strategy. Here, it is seen that the speed profile is flattened, which is already comfortable for the driver but fails to compensate for an increased power consumption due to the climbing. The average vehicle speed will be elevated and even closely following the set vehicle speed, which will be negative for the energy efficiency.

In Figure 3C, the inventive principle is applied, to reduce a cruise control set speed of the hybrid vehicle HV*. Accordingly, an average vehicle speed of the vehicle HV* is reduced by an offset (CC offset) due to the loss of average speed of a reference vehicle caused by a gear shift while the vehicle travels over the anticipated route. While both Figure 3C and 3D depict a scenario with a gear strategy that prevents a gear shift of the transmission while the hybrid vehicle travels over the anticipated route, Figure 3D may be able to travel the anticipated route even without prior gear shifting, i.e continuing in standard shift gear, due to an available boost power. By a lowered cruise control setpoint CC*, an average vehicle speed can be made equal to an average speed of the reference vehicle.

While in the depicted figures the cruise control set speed is lowered prior to traveling the graded profile, part of the graded profile may be travelled already, up to a level where speed dips are minimal compared to a conventional shift strategy. The profile need not be essentially flat, so that the vehicle may still continue substantially unhindered. In the graded profile of the anticipated route at least a part is provided where the speed will substantially decrease. Thus, a cruise control set speed may be further lowered during traveling the graded profile. In addition to this, as illustrated, the cruise control set speed may be lowered with a step function but alternatively the cruise control set speed is lowered with a continuous function.
While example embodiments are shown for systems and methods, also alternative ways according to the appended claims may be envisaged by those skilled in the art having the benefit of the present invention for achieving a similar function and result. E.g. some components may be combined or split up into one or more alternative components. Finally, these embodiments are intended to be merely illustrative of the present system and should not be construed as limiting the appended claims to any particular embodiment or group of embodiments. Thus, while the present system has been described in particular detail with reference to specific exemplary embodiments thereof, it should also be appreciated that numerous modifications and alternative embodiments may be devised by those having ordinary skill in the art without departing from the scope of the present systems and methods as set forth in the claims that follow. The specification and drawings are accordingly to be regarded in an illustrative manner and are not intended to limit the scope of the appended claims.

## Claims

1. A system of controlling a hybrid vehicle on a graded route, the hybrid vehicle including a combustion engine (20), an electric traction motor (22) and an automatic transmission (28), and further comprising a controller (100) programmed to:
- receiving data indicative of a grade profile (GP) of an anticipated route;
- calculating, by a reference vehicle module (RV), a loss of average speed of a reference vehicle caused by a gear shift while the vehicle travels over the anticipated route; and
- reducing, by a comparator module (CM), a cruise control set speed (CC) to a reduced cruise control setpoint (CC*) of the hybrid vehicle calculated by the reference vehicle module, thereby reducing an average vehicle speed (V_av) of the vehicle by an offset due to the loss of average speed of a reference vehicle caused by a gear shift while the vehicle travels over the anticipated route; and
- executing by a host vehicle module (HV), a gear strategy (GS*) based on the reduced cruise control set speed (CC*) for preventing the gear shift of the transmission (28) while the hybrid vehicle travels over the anticipated route.

2. The system according to claim 1, wherein the controller (100) is further programmed to:
- estimating an available amount of electric power available for the traction motor;
- where the gear strategy (GS*) includes not shifting the transmission (28) as the vehicle travels over the anticipated route by maintaining the vehicle speed at the lowered set speed (CC*) with aid of the traction motor (22) in case of a sufficient available amount of electric power.

3. The system according to claim 1 or 2, wherein the gear strategy (GS*) includes adjusting the transmission (28) according to a predictive gear shift, based on the received data to a down shift prior to traveling the graded profile (GP).

4. The system according to any preceding claim, wherein the system further comprises the controller (100) programmed to increase an amount of electric power available for the hybrid vehicle in dependence of an amount of extra power needed.

5. The system according to any preceding claim, wherein the system further comprises the controller (100) programmed increase a cruise control set speed (CC) to a higher value prior to traveling the graded profile (GP) and prior to reducing the cruise control set speed to a lower value (CC*).

6. The system according to any preceding claim, wherein the cruise control set speed (CC) is lowered to compensate a fraction of the amount of vehicle speed lost due to gear shifting needed to travel over the anticipated route due to the grade profile (GP) at current vehicle speed.

7. The system according to any preceding claim, wherein the cruise control set speed (CC) is lowered prior to traveling the graded profile (GP).

8. The system according to any preceding claim, wherein the cruise control set speed (CC) is lowered during traveling the graded profile (GP).

9. The system according to any preceding claim, wherein the cruise control set speed (CC) is lowered overtime with a step function.

10. The system according to any preceding claim, wherein the cruise control set speed (CC) is lowered overtime with a continuous function.

## Patentansprüche

1. System zur Steuerung eines Hybridfahrzeugs auf einer Steigungsfahrstrecke, wobei das Hybridfahrzeug einen Verbrennungsmotor (20), einen elektrischen Fahrmotor (22) und ein Automatikgetriebe (28) beinhaltet und ferner eine Steuerung (100) umfasst, die programmiert ist zum:
- Empfangen von Daten, die ein Steigungsprofil (GP) einer voraussichtlichen Fahrstrecke angeben;
- Berechnen eines Verlusts der Durchschnittsgeschwindigkeit eines Referenzfahrzeugs, der durch einen Gangwechsel verursacht wird, während der Fahrt des Fahrzeugs auf der voraussichtlichen Fahrstrecke, durch ein Referenzfahrzeugmodul (RV); und
- Verringern einer von der Geschwindigkeitsregelanlage eingestellten Geschwindigkeit (CC) durch ein Komparatormodul (CM) auf einen vom Referenzfahrzeugmodul berechneten reduzierten Sollwert der Geschwindigkeitsregelanlage (CC*) des Hybridfahrzeugs, wodurch eine durchschnittliche Fahrzeuggeschwindigkeit (V_av) des Fahrzeugs um einen Versatz aufgrund des Verlusts der Durchschnittsgeschwindigkeit eines Referenzfahrzeugs verringert wird, der durch einen Gangwechsel während der Fahrt des Fahrzeugs auf der voraussichtlichen Fahrstrecke verursacht wird; und
- Ausführen einer Gangstrategie (GS*) durch ein Host-Fahrzeugmodul (HV) auf der Grundlage der von der Geschwindigkeitsregelanlage reduzierten eingestellten Geschwindigkeit (CC*) zum Verhindern des Gangwechsels des Getriebes (28), während der Fahrt des Hybridfahrzeugs auf der voraussichtlichen Fahrstrecke.

2. System nach Anspruch 1, wobei die Steuerung (100) ferner programmiert ist zum:
- Schätzen der für den Fahrmotor verfügbaren elektrischen Leistung;
- wobei die Gangstrategie (GS*) das Nichtschalten des Getriebes (28) während der Fahrt des Fahrzeugs über die voraussichtliche Fahrstrecke beinhaltet, indem die Fahrzeuggeschwindigkeit mit Hilfe des Fahrmotors (22) bei einer ausreichenden verfügbaren elektrischen Leistung auf der verringerten Sollgeschwindigkeit (CC*) gehalten wird.

3. System nach Anspruch 1 oder 2, wobei die Gangstrategie (GS*) das Anpassen des Getriebes (28) gemäß einer vorausschauenden Gangschaltung auf der Grundlage der empfangenen Daten zu einer Herunterschaltung vor der Fahrt durch das Steigungsprofil (GP) beinhaltet.

4. System nach einem der vorstehenden Ansprüche, wobei das System ferner die Steuerung (100) umfasst, die so programmiert ist, dass sie eine für das Hybridfahrzeug verfügbare elektrische Leistungsmenge in Abhängigkeit von einer benötigten zusätzlichen Leistungsmenge erhöht.

5. System nach einem der vorstehenden Ansprüche, wobei das System ferner die Steuerung (100) umfasst, die so programmiert ist, dass sie eine von der Geschwindigkeitsregelanlage eingestellte Geschwindigkeit (CC) vor der Fahrt durch das Steigungsprofil (GP) und vor dem Verringern der von der Geschwindigkeitsregelanlage eingestellten Geschwindigkeit auf einen niedrigeren Wert (CC*) erhöht.

6. System nach einem der vorstehenden Ansprüche, wobei die von der Geschwindigkeitsregelanlage eingestellte Geschwindigkeit (CC) verringert wird, um einen Bruchteil der Fahrzeuggeschwindigkeit zu kompensieren, die aufgrund der Gangschaltung verloren geht, die erforderlich ist, um die voraussichtliche Fahrstrecke bei der aktuellen Fahrzeuggeschwindigkeit und aufgrund des Steigungsprofils (GP) zu befahren.

7. System nach einem der vorstehenden Ansprüche, wobei die von der Geschwindigkeitsregelanlage eingestellte Geschwindigkeit (CC) vor der Fahrt durch das Steigungsprofil (GP) verringert wird.

8. System nach einem der vorstehenden Ansprüche, wobei die von der Geschwindigkeitsregelanlage eingestellte Geschwindigkeit (CC) während der Fahrt auf dem Steigungsprofil (GP) verringert wird.

9. System nach einem der vorstehenden Ansprüche, wobei die von der Geschwindigkeitsregelanlage eingestellte Geschwindigkeit (CC) mit der Zeit in einer Stufenfunktion verringert wird.

10. System nach einem der vorstehenden Ansprüche, wobei die von der Geschwindigkeitsregelanlage eingestellte Geschwindigkeit (CC) mit der Zeit in einer Dauerfunktion verringert wird.

## Revendications

1. Système de commande d'un véhicule hybride sur un itinéraire en pente, le véhicule hybride comprenant un moteur à combustion (20), un moteur de traction électrique (22) et une transmission automatique (28), et comprenant en outre un dispositif de commande (100) programmé pour :
- recevoir des données indiquant un profil de pente (GP) d'un itinéraire prévu ;
- calculer, par un module de véhicule de référence (RV), une perte de vitesse moyenne d'un véhicule de référence causée par un changement de vitesse, alors que le véhicule se déplace sur l'itinéraire prévu ; et
- réduire, par un module comparateur (CM), une vitesse de consigne du régulateur de vitesse (CC) à un point de consigne réduit du régulateur de vitesse (CC*) du véhicule hybride calculé par le module de véhicule de référence, réduisant ainsi une vitesse moyenne de véhicule (V_av) du véhicule d'un décalage dû à la perte de vitesse moyenne d'un véhicule de référence causée par un changement de vitesse pendant que le véhicule se déplace sur l'itinéraire prévu ; et
- exécuter, par un module de véhicule hôte (HV), d'une stratégie de changement de vitesse (GS*) fondée sur la vitesse de consigne réduite du régulateur de vitesse (CC*) pour empêcher le changement de vitesse de la transmission (28) pendant que le véhicule hybride se déplace sur l'itinéraire prévu.

2. Système selon la revendication 1, dans lequel le dispositif de commande (100) est en outre programmé pour :
- estimer une quantité d'énergie électrique disponible pour le moteur de traction ;
- où la stratégie de changement de vitesse (GS*) comprend l'absence de changement de rapport (28) lorsque le véhicule parcourt l'itinéraire prévu en maintenant la vitesse du véhicule à la vitesse de consigne abaissée (CC*) à l'aide du moteur de traction (22) si une quantité d'énergie électrique disponible est suffisante.

3. Système selon la revendication 1 ou 2, dans lequel la stratégie de changement de vitesse (GS*) comprend l'ajustement de la transmission (28) en fonction d'un changement de vitesse prédictif, fondé sur les données reçues, pour un rétrogradage avant de parcourir le profil de pente (GP).

4. Système selon l'une quelconque des revendications précédentes, dans lequel le système comprend en outre le dispositif de commande (100) programmé pour augmenter une quantité d'énergie électrique disponible pour le véhicule hybride en fonction d'une quantité de puissance supplémentaire nécessaire.

5. Système selon l'une quelconque des revendications précédentes, dans lequel le système comprend en outre le dispositif de commande (100) programmé pour augmenter une vitesse de consigne de régulateur de vitesse (CC) à une valeur plus élevée avant de parcourir le profil de pente (GP) et avant de réduire la vitesse de consigne de régulateur de vitesse à une valeur plus basse (CC*).

6. Système selon l'une quelconque des revendications précédentes, dans lequel la vitesse de consigne de régulateur de vitesse (CC) est abaissée pour compenser une fraction de la quantité de perte de vitesse de véhicule due au changement de vitesse nécessaire pour parcourir l'itinéraire prévu en raison du profil de pente (GP) à la vitesse actuelle du véhicule.

7. Système selon l'une quelconque des revendications précédentes, dans lequel la vitesse de consigne de régulateur de vitesse (CC) est abaissée avant de parcourir le profil de pente (GP).

8. Système selon l'une quelconque des revendications précédentes, dans lequel la vitesse de consigne de régulateur de vitesse (CC) est abaissée pendant le trajet sur le profil de pente (GP).

9. Système selon l'une quelconque des revendications précédentes, dans lequel la vitesse de consigne de régulateur de vitesse (CC) est abaissée graduellement avec une fonction d'échelon.

10. Système selon l'une quelconque des revendications précédentes, dans lequel la vitesse de consigne de régulateur de vitesse (CC) est abaissée graduellement avec une fonction continue.
